# EUROPEAN PATENT SPECIFICATION

(11) **EP 0 522 172 B1**
(45) Date of publication and mention of the grant of the patent: **14.04.1999**
(21) Application number: 92903713.3
(22) Date of filing: 24.01.1992
(51) Int. Cl.: B65G 1/04

(54) **BAR TRANSPORTING DEVICE**
STANGENTRANSPORTEINRICHTUNG
DISPOSITIF DE TRANSPORT DE BARRES

(30) Priority: 24.01.1991 JP 71/91
(43) Date of publication of application: 13.01.1993
(73) Proprietor: AMADA COMPANY, LIMITED, Kanagawa 259-11 (JP)
(72) Inventor: TOKIWA, Toru, Kanagawa 257 (JP)
(74) Representative: Hasenrader, Hubert
(86) International application number: JP9200061
(87) International publication number: WO9212915

(56) References cited:
- EP-A- 0 013 033
- EP-A- 0 405 064
- EP-A- 0 407 703
- WO-A-83/03086
- WO-A-84/00739
- DE-B- 2 163 101
- FR-A- 2 393 743
- FR-A- 2 617 145

## Description

### Technical Field

This invention relates to a bar transporting device for transporting bars into and out of a bar processing machine such as a sawing machine and for restoring the bars to the original positions when necessary.

### Background Art

In the prior art, a bar transporting device for transporting bars into and out of a bar processing machine such as a sawing machine is disclosed in Japanese Patent 90-145209 (A). Furthermore, US Patent 4362454 and DE Patent 4018139 (A1) seem to relate to the present invention.

When an elongated bar is processed to a predetermined length by the bar processing machine such as a sawing machine, there may be residual bars. The residual bars must be disposed of or stored again for reuse. As described above, the bars must not only be transported into the bar processing machine but must also be carried from the machine and stored.

From DE 40 18 139 is known a workpiece transporting device for transporting workpieces into and out of at least one workpiece processing machine, comprising a shelf frame provided with vertically arranged pallet shelves onto which pallets loaded with workpiece (W) are to be removably stored and a vertically movable elevating device provided at the front end of the shelf frame and adapted to transport the pallets into and out of the shelf frame, said elevating device comprising a base guided along the shelf frame for vertical movement relative thereto and a transporting means which is movable along the base for transporting the pallets between the pallet shelves and the base and between the base and a workpiece feeding position.

In addition, there is a need to automatically transport bars of different shapes and/or dimensions into and out of the bar processing machine in order to cope with, or be prepared for factory automation requiring little or no labour and for low volume, multivariety production of bars.

### Disclosure of the invention

According of the above-mentioned need, a bar transporting device for transporting bars into and out of at least one bar processing machine comprises also a bar forwarding device for transporting the bars of a pallet removed from a pallet shelf, towards the bar processing machine.

According to a first aspect of the invention, the bar forwarding device is provided above the level of the bar feeding position and opposite said elevating device, and has bar holding portions movable along a vertical direction and two horizontal directions, and either said transporting means or said forwarding device is arranged so as to be able to reciprocate also within said shelf frame in a horizontal direction perpendicular to the front end of the shelf frame and perpendicular to the longitudinal direction of the bars laid horizontally.

According to a second aspect of the invention, the bar feeding position is located in the lower part of said shelf frame and the bar transporting device is characterised in that the bar forwarding device is provided within the lower part of the shelf frame, above said bar feeding position and has bar holding portions movable along a vertical direction and two horizontal directions, the bar feeding direction of said holding portions out of the shelf frame towards said bar processing machine being parallel to the front end of the shelf frame and to the longitudinal direction of the bars.

According to a third aspect of the invention, the transporting means are movable along the base for transporting the pallets between a pallet shelf and the base and between the base and a pallet position located at the lower portion of the shelf frame, and the bar transporting device is characterised in that the bar forwarding position is arranged opposite a lateral side of said shelf frame, that a pallet forwarding device is arranged to transport a pallet placed at the lower portion of the shelf frame, into the bar feeding position and therefrom back into said lower portion of the shelf frame ; and in that the bar forwarding device is provided above the level of the bar feeding position and opposite said lateral side of the shelf frame and has bar holding portions movable along a vertical direction and two horizontal directions, whereby the X-direction is parallel to the longitudinal direction of the bars and the transport direction of the pallet forwarding device.

According to a fourth aspect of the invention, the bar transporting device has a first vertically movable elevating device provided at the front end of the shelf frame and adapted to transport the pallets into and out of the shelf frame and is characterised in that a second elevating device is provided at the rear end of said shelf frame, each of said elevating devices having a base guided along the shelf frame for vertical movement relative thereto, that the bar forwarding device is provided opposite said first elevating device at the rear end of said shelf frame, is vertically movable relative to said shelf frame and has bar holding portions movable along a vertical direction and two horizontal directions, and that said transporting means is arranged so as to be able to push a pallet onto the second elevating device in alignment with the first elevating device.

According to an embodiment of the present invention, the bar forwarding device for transporting the bars from the pallet positioned at the bar feeding position towards the bar processing machine includes a plurality of carriages, a base movable in the direction parallel to the extension of the bars, guide rails extending in a direction perpendicular to the longitudinal direction of the bar and vertically movable bar holding portions each of them being mounted on one of said carriages, said base is horizontally movable on said guide rails, and said carriages are mounted on said base so as to be independently or synchronously movable in the longitudinal direction of the bar.

According to a further embodiment of the present invention, the bar forwarding device for transporting the bars from the pallets positioned at the bar feeding position, towards the bar processing machine includes a plurality of carriages movably mounted on a pair of guide rails provided in the lower part of the shelf frame and extending in the X-direction of the bars beyond both lateral ends of the shelf frame, and the bar forwarding device further includes, for each carriage, a slide base movable along said guide rails and a slider mounted on a corresponding slide base so as to be able to reciprocatable along said base in the Y-direction, as well as a vertically movable lifting arm provided on said slider and attached, at its lower end, to a bar holding portion.

The pallet is positioned on one of the shelves or removed from the shelf by vertically moving and positioning the elevating device at a position relative to the shelf which is at a certain height. After the elevating device has transported the pallet from the pallet shelf, the elevating device moves vertically to transport the pallet to the bar feeding position. The bar forwarding device then picks up one of the bars carried on this pallet and feeds the bar to the bar processing device.

When the bar is processed by the bar processing machine so that a residual bar results, the bar forwarding device can pick up and transport the residual bar, if required, from the bar processing machine onto a pallet located in the bar feeding position. The pallet is then stored on the prior pallet shelf by means of the elevating device.

Therefore, the bars of different shapes and/or dimensions can be automatically transported into and out of the bar processing machine. This satisfies the above-mentioned need.

### Brief Description of Drawings

Fig. 1 is a sectional elevation of a first embodiment of the device of the present invention, taken along line I-I in Fig. 2.
Fig. 2 is a sectional plan view taken along line II-II in Fig. 1.
Fig. 3 is a sectional elevation of a second embodiment of the device of the present invention, similar to Fig. 1.
Fig. 4 is a sectional plan view of a third embodiment of the device of the present invention, similar to Fig. 2.
Fig. 5 is a sectional plan view of a fourth embodiment of the device of the present invention, similar to Fig. 2.
Fig. 6 is a sectional elevation of a fifth embodiment of the device of the present invention, similar to Fig. 1.
Fig. 7 is a sectional elevation of a sixth embodiment of the device of the present invention, similar to Fig. 1.
Fig. 8 is a sectional elevation of a seventh embodiment of the device of the present invention, similar to Fig. 1.

### Best Mode for Carrying Out the Invention

The present invention will now be described in detail through embodiments with reference to the accompanying drawings.

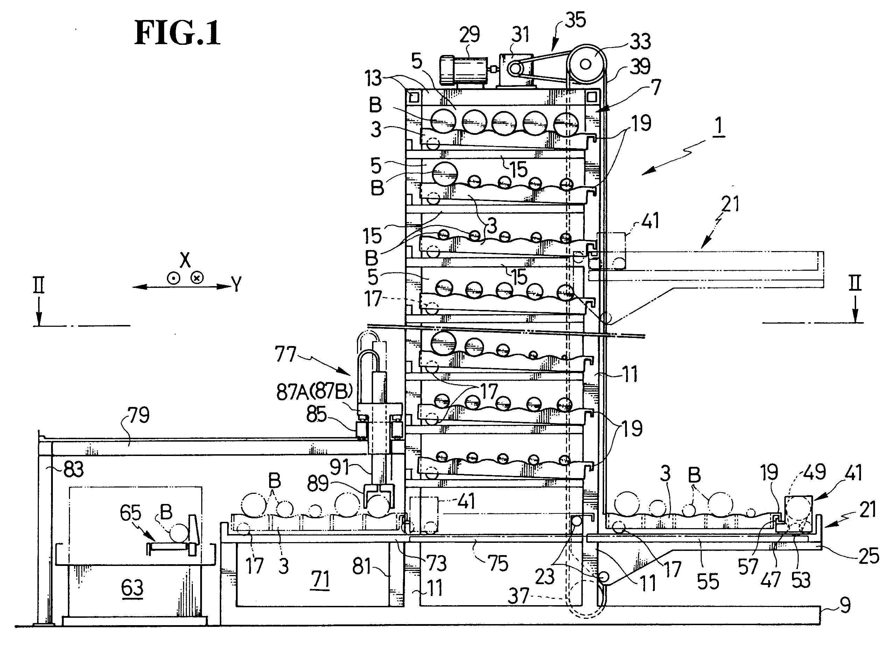

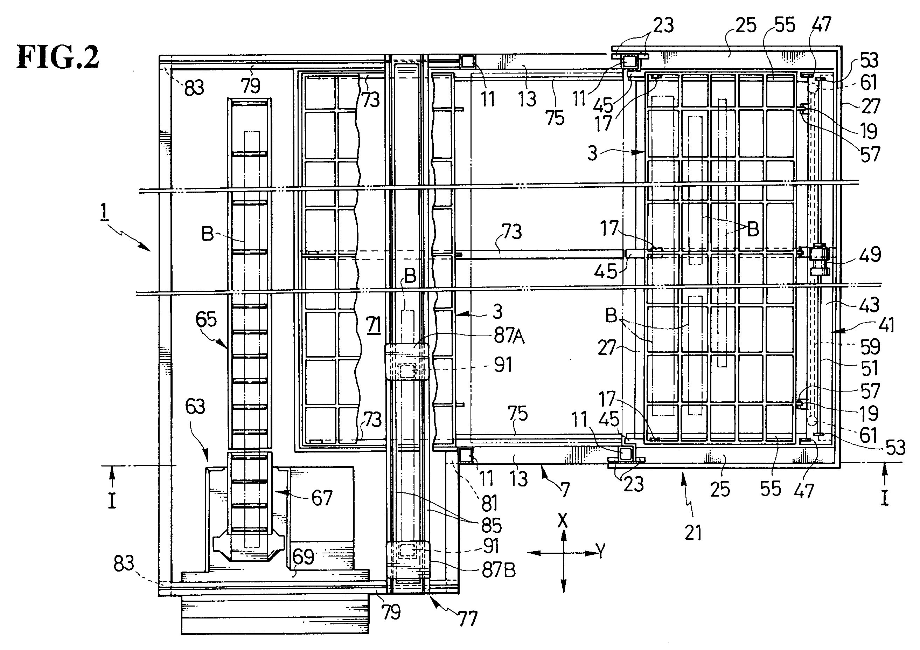

Referring to Figs. 1 and 2, a bar transporting device 1 in an embodiment of the present invention includes a shelf frame 7 provided with a plurality of vertically arranged pallet shelves 5 each of which removably accommodates a pallet 3 transporting elongated bars B of various shapes, for example, square or round.

The shelf frame 7 is a frame structure in the shape of a parallelepiped, consisting of a plurality of upright columns 11 supported on a base 9, tie beams 13 connecting the columns 11, and horizontal pallet supporting rails 15. The horizontal supporting rails 15 act as pallet shelves 5 in the shelf frame 7. Thus, a plurality of pallet shelves 5 are vertically arranged in the frame 7.

The pallet 3 is formed as a grid constructed of plates to provide a rectangular shape as shown in Fig. 2. As shown in Fig. 1, the upper surface of the pallet 3 is formed with a plurality of depressions suitably spaced in the Y direction to stably transport the elongated bars extending in the X direction (the direction perpendicular to the drawing). The pallet 3 is provided with a plurality of rollers 17 at a central and both side portions of a rear part (the left side in Figs. 1 and 2) to provide smooth movement in the Y direction and, at a front part, with a plurality of hooks 19 which are engaged or disengaged vertically from the bottom. Hence, the pallet 3 inclines when stored on the pallet shelf 5, while the front part of the pallet 3 is a little lower than the rear part with a bottom edge of the front part contacting the pallet supporting rails 15.

Therefore, the pallet 3 is usually maintained in an immobile condition by contact friction.

An elevating device 21 is disposed in front of the shelf frame 7. The elevating device 21 moves vertically to transport the pallet 3 into and out of each pallet shelf 5.

The shape of the elevating device 21 is almost a rectangle. That is, the elevating device 21 is formed in a rectangular shape by two vertically movable elevating bases 25 guided through a plurality of guide rollers 23 along the columns 11 at both sides of the front end of the shelf frame 7 and a plurality of connecting members 27 which integrally connect the elevating bases 25.

A motor 29 for moving the elevating device 21 along the front columns 11 is mounted on an upper portion of the shelf frame 7. The motor 29 drives a final reduction gear 31. The final reduction gear 31 is connected through a power transmission mechanism 35, which may be comprised of chains, timing belts, or the like, to two sprockets 33 disposed one at each side of the upper portion of the shelf frame 7 so that the sprockets 33 can be driven by the motor 29. A pair of follower sprocket 37 are provided at the foot of the shelf frame 7, opposing the upper sprockets. A pair of chains 39 run around the upper and lower sprockets 37. The chains 39 are connected to the elevating bases 25 of the elevating device 21.

Therefore, the elevating device 21 is moved vertically along the front columns by suitably controlling the rotation of the motor 29.

Positioning of the elevating device 21 at a height relative to a predetermined shelf 5 of the shelf frame 7 is, for example, (detailed drawings omitted) easily carried out by sensors mounted on the shelf frame 7 at heights corresponding to pallet shelves 5, and a dog mounted on the elevating device 21, so that the elevating device 21 stops when the one of the sensors is actuated by the dog.

The elevating device 21 is provided with a traverser 41 which is movable forward and backward (to the right and left in Figs. 1 and 2) to transport the pallets 3 of the pallet shelves 5 in and out. The traverser 41 mainly consists of an elongated movable member 43 extending in the X direction and supported at both ends by the elevating bases 25. The movable member 43 is provided at both ends and at a central portion with rollers 47 which roll on guide portions 45 of the elevating bases 25 and a central guide portion 45 of the elevating device 21.

The movable member 43 of the traverser 41 is activated by a motor 49. A long rotating axis of the motor 49 extending in the X direction is rotatably supported by the movable member 43. Pinions 53 are attached to the ends of the rotating axis of the motor 49 and engages racks 55 formed on the elevating bases 25 and extending in the Y direction.

In order to transport the pallets 3 of the pallet shelves 5 in and out by the movement of the traverser 41 in the Y direction, the traverser 41 is provided with hooks 57 for engaging and disengaging the hooks 19 on the front portion of the pallet 3 from a lower portion. The hooks 57 of the traverser 41 are vertically movable with respect to the movable member 43. The hooks 57 may be vertically moved by actuators, one actuator for each hook. However, in this embodiment as shown in Fig. 2, all the hooks 57 are attached integrally to a vertically movable lifting member 59 provided on the movable member 59. Both ends of the lifting member 59 are connected to hook lifting actuators 61 such as air cylinders.

Hence, the hooks 57 of the traverser 41 are raised or lowered by activating the hook lifting actuators 61 with respect to the movable member 43 to engage or disengage the hooks 19 of the pallet 3.

As may be already understood from the above explanation, the elevating device 21 stops at a desired height corresponding to one of the pallet shelves 5 and draws the pallet 3 from the pallet shelves 5 by engaging the hooks 57 of the traverser 41 with the hooks 19 of the pallet 3 on the pallet shelf 5 and slightly lifting the front end of the pallet 3 and by driving the motor 49 for withdrawing the pallet 3 onto the elevating bases 25 of the elevating device 21.

Conversely, the pallet 3 supported on the elevating device 21 can be positioned on the pallet shelf 5 by pushing the pallet backward using the body of the traverser 41.

A bar processing machine 63 such as a sawing machine for processing the bars B lying on the pallet 3 is installed at the rear (the left side in Figs. 1 and 2) of the shelf frame 7. The bar processing machine 63 is provided with a roller conveyor portion 65, a bar moving portion 67 for transporting the bars B in the longitudinal direction of the bar, and a bar processing portion 69 for processing the bars B. The details of the bar processing machine 63 are not explained here since a sawing machine is well known as an example of the bar processing machine 63.

In order to supply the bar processing machine 63 with the bars B, a bar feeding position or portion 71 is disposed adjacent to the bar processing machine 63. The bar feeding position 71 is a location at which the pallet 3 is positioned after removal from the pallet shelf 5 and, in this embodiment, being passed through the lower portion of the shelf frame 7 by the elevating device 21. The bars B are fed from this bar feeding position 71 to the bar processing machine 63.

In order to forward the pallet 3 from the elevating device 21 to the bar feeding position 71 and support the pallet 3 there, guide portions 73 extending from the lower portion of the shelf frame 7 up to the bar feeding position 71 are disposed for guiding the pallet forward and backward. Furthermore, racks 75 extending in the Y direction are provided in the lower part of the shelf frame 7 so that the elevating device 21 can pass through the lower part while the pinions 53 of the traverser 41 engages the racks 75.

Hence, the traverser 41 of the elevating device 21 can reciprocate through the lower part of the shelf frame 7 when the racks 55 of the elevating device 21 and the racks 75 in the lower part of the shelf frame 5 are at the same height. That is, the pallet 3 is moved by the traverser 41 to and fro between the elevating device 21 which is at the front of the shelf frame 7 and the bar feeding position which is at the rear of the shelf frame 7.

In order to feed the bar B from the pallet 3 into the bar processing machine, a bar forwarding device 77 is disposed above the bar feeding position 71. The bar forwarding device 77 may be an overhead crane, however in this embodiment, it is designed as mentioned below.

As can be seen from Figs. 1 and 2, horizontal guide rails 79 are provided over both the bar processing machine 63 and the bar feeding position 71. The guide rails 79 are supported at their ends by front supports 81, which are integrally attached to the shelf frame 7, and rear supports 83.

The outside guide rails 79 support a movable base 85 at its ends. The movable base 85 extends parallel to the bars B on the pallet 3, or in the X direction, and moves forward and backward, or in the Y direction. The movable base 85 is reciprocated along the guide rails 79 by suitably controlling a servo motor (not shown) for driving the base 85 to move in the Y direction. The controlling of the servo motor positions the base 85 over the bar B lying on the roller conveyor portion 65 of the bar processing machine 63.

Furthermore, first and second carriage 87A and 87B are supported by the movable base 85 movably in the longitudinal direction of the bars B (in the X direction). Each carriage 87A (87B) is provided with a vertically movable lifting arm 91 which has at a lower end a bar holding portion 89 for catching the bar B.

The carriages 87A, 87B can be moved independently along the movable base 85 by independently controlling servo motors (not shown), one mounted on each carriage 87A (87B), for driving the carriage. The carriages 87A, 87B can also be moved simultaneously in the same direction by synchronously driving the servo motors.

The movements of the carriage 87A, 87B are controlled to adjust spacing between them, so that the bar holding portions 89 of the carriages 87A, 87B can catch the bars B of various lengths. After being gripped by the bar holding portions 89, the bar B is moved, when necessary, in the longitudinal direction of the bar by moving the carriages 87A and 87B simultaneously in the same longitudinal direction.

The bar holding portions 89 act as clampers for clamping the bars B, and are similar to general robot hands. Therefore, details of clamping and unclamping the bar B are not explained here.

The bar holding portion 89 may not be the clamper. Devices other than the clamper may be used instead. For example, an L-shaped hook which supports the bar B from the bottom can be used.

The lifting arms 91 are moved by a hydraulic cylinder (not shown).

The bar forwarding device is designed as explained above, so that the bars B are fed from the bar feeding position 71 into the bar processing machine 63 as mentioned below.

After the bar B lying on the pallet 3 has been held by the bar holding portions 89 of the carriages 87A, 87B and lifted by actuating the lifting arms 91, the movable base 85 is positioned above the roller conveyor portion 65 of the bar processing machine 63. Then, the lifting arms 91 are lowered, and the bar holding portions 89 are released to position the bar B on the roller conveyor portion 65 of the bar processing machine 63.

In the case that a plurality of short bars B are arranged in a row in the longitudinal direction of the bar, the carriages 87A, 87B are moved along the movable base 85 to transport all the short bars in the longitudinal direction of the bars B. Thus, all the bars B are fed, piece by piece, into the bar processing machine 63.

Similarly, bars (residual ones) at the bar processing machine 63 can be returned onto the pallet 3 positioned at the bar feeding position 71, and residual short bars at the bar processing machine 63 can be stored in a row on the pallet 3.

As can be understood from the above explanation of this embodiment, the elevating device 21 stops at the height in the front of the pallet shelf 7 and withdraws the pallet 3 from the predetermined shelf 5, and then positions it at the bar feeding position 71.

After it, the bar forwarding device 77 transports the bars B in turn from the pallet 3 positioned at the bar feeding position 71 into the bar processing machine 63. Furthermore, the residual bars produced during the processing of the bars B can be removed and positioned on the pallet 3 located in the bar feeding position 71.

While the bars B are removed from the pallet 3 withdrawn from the elevating device 21 and located in the bar feeding position 71, and fed into the bar processing machine 63 for processing, the elevating device 21 is able to move vertically, if the traverser 41 has returned to the elevating device 21.

Hence, it is possible to withdraw, for example, one empty pallet 3 from the pallet shelf 5 onto the elevating device 21 and then position the elevating device 21 at a required height. After it, the empty pallet 3 is loaded with new bars using, for example, a lifting machine such as a crane, hoist, or fork lift, for the preparation for future bar processing. The pallet 3 loaded with new bars may be stored on the pallet shelf 5, if necessary.

According to the present invention, a large number of bars B of several shapes and dimensions are loaded on the pallets 3 and stored in a relatively small area, and the pallets are removed when necessary so that the bars lying on the pallets are fed into the bar processing machine 63. Furthermore, the residual bars produced during the processing of bars are automatically removed from the bar processing machine, and the empty pallets are easily supplied with new bars for future processing.

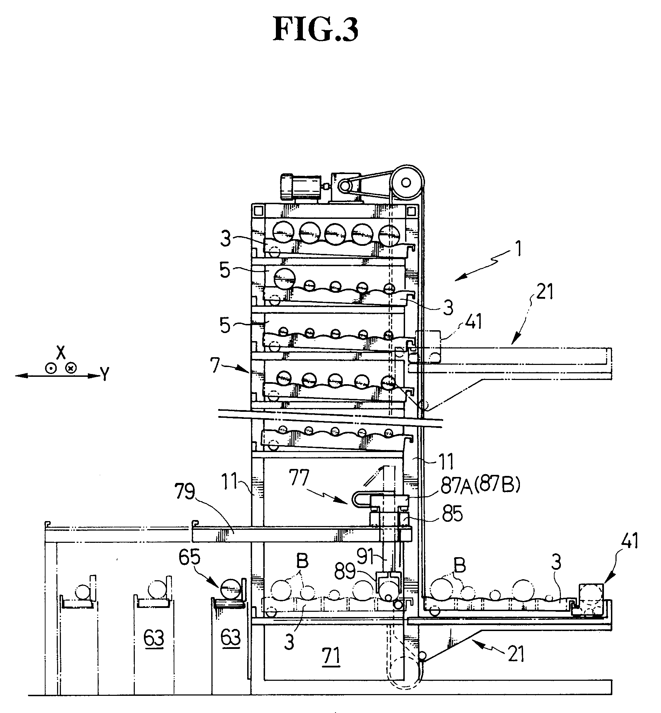

Fig. 3 shows a second embodiment of the bar transporting device 1 of the present invention. The point different from the first embodiment is that a bar feeding position 71 is disposed in a lower part of a shelf frame 7 and that a bar forwarding device 77 moves into and out of the lower part of the shelf frame 7 in this embodiment.

The configuration other than that point is the same as that of the first embodiment. Components with the same function are therefore assigned the same reference characters in this embodiment, and a further detailed explanation is omitted.

In the second embodiment, pallet shelves 5 becomes less in number, and however, the bar transporting device 1 occupies a floor area smaller than that of the first embodiment. Therefore, it is possible to install a plurality of bar processing machines 63 in the same floor area as that in the first embodiment, and as a result more bars B are processed at the same time.

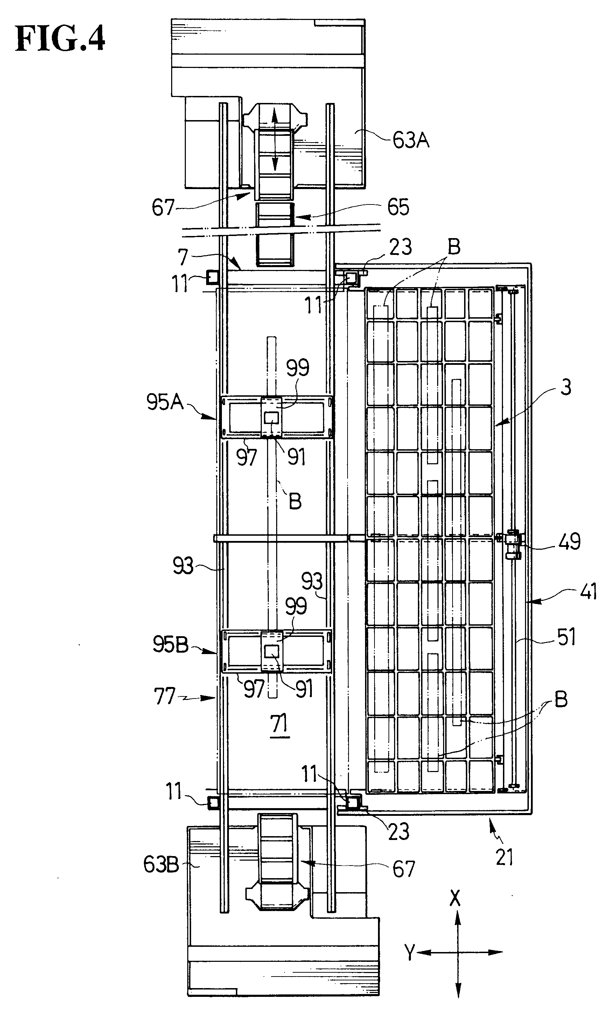

Fig. 4 is a plan showing a third embodiment of the present invention, and is similar to Fig. 2 of the first embodiment. In this third embodiment, both a bar forwarding device 77 and a bar feeding position 71 are disposed in the lower part of the shelf frame 77.

A pair of guide rails 93 extending in the X direction parallel to a longitudinal direction of bars B are provided in the lower part of the shelf frame 77. Ends of the guide rails 93 project from both ends of the shelf frame 7 to some extent in the X direction. First and second bar processing machines 63A, 63B are disposed under the end portions of the guide rails 93.

First and second carriages 95A, 95B are movably mounted on the pair of guide rails 93. Each of the first and second carriages 95A, 95B is provided with slide base 97 which is movable in the X direction along the guide rails 93. The slide base 97 is formed as a rectangular frame. A slider 99 is movably mounted on each slide base 97. The slider 99 is reciprocated in the Y direction on the slide base 97 by actuating a servo motor (not shown) mounted on the slider 99. The slider 99 is provided with a vertically movable lifting arm 91 to a lower end of which a bar holding portion (not shown) is attached, the same as in the first embodiment.

In the above design of this third embodiment, after the elevating device 21 has withdrawn the pallet 3 from the pallet shelf 5 of the shelf frame 7 onto the elevating device 21 itself and descended to the lowest position, it pushes the pallet 3 into the bar feeding position 71 under the first and second carriages 95A, 95B.

The slide bases 97 of the carriages 95A, 95B are moved in the X direction so that the slide bases 97 are suitably spaced each other to hold the bar B of a length, and the sliders 99 are moved in the Y direction on the slide bases 97 until they come to a position above one of the bars B on the pallet 3 positioned in the bar feeding position 71.

After it, the lifting arms 91 are lowered to hold the bar by the bar holding portions and then raised. The slide bases 97 are, then, moved simultaneously in the X direction to fed the bar into either one of the first or second bar processing machine 63A or 63B. Another bar is then fed to the other bar processing machine 63B or 63A so that the first and second bar processing machines 63A, 63B can process the bars B at the same time.

When the bars B are so relatively short that each carriage 95A, 95B can hold the short bar B, the carriages 95A, 95B are controlled individually to supply the carriages 95A, 95B respectively with short bars B at the same time.

As being explained above, the first and second bar processing machines 63A, 63B are, in this embodiment, used independently of each other in relation with the diameter, length and so on of the bars B, or used synchronously to process the plurality of bars at the same time. The bar transporting device of this third embodiment saves the space and processes the bars with efficiency.

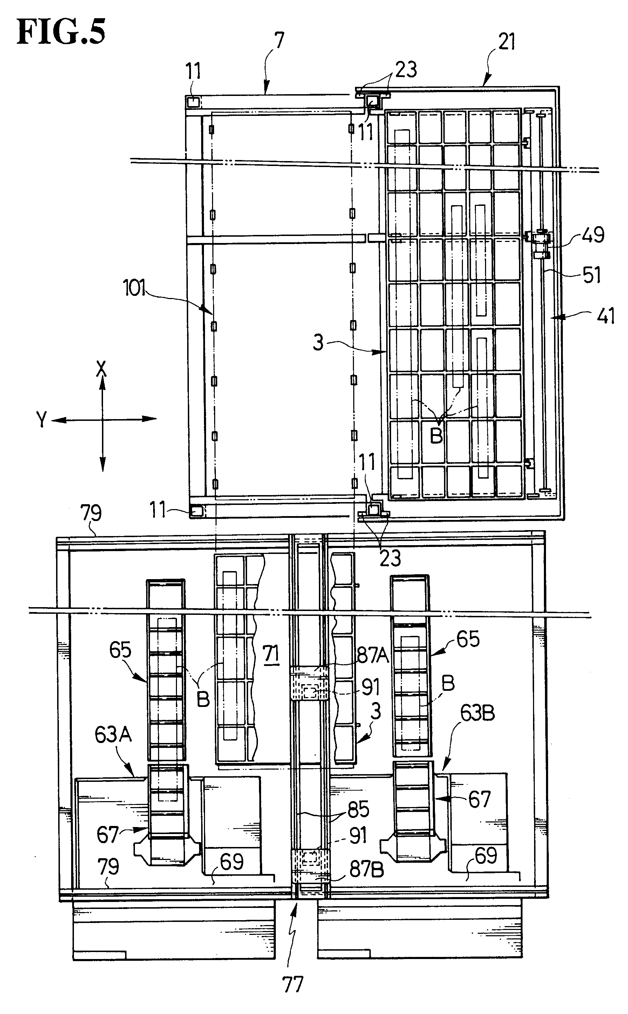

Fig. 5 is a plan showing a fourth embodiment of the present invention, and is similar to Fig 2 of the first embodiment.

In this fourth embodiment, a bar feeding position 71 is located at one side (in the X direction) of a shelf frame 7, and first and second bar processing machines 63A, 63B are disposed at the sides (in the Y direction) of the bar feeding position 71.

As the bar forwarding position 71 is located at the side of the shelf frame 7 in this embodiment, a pallet forwarding device 101 for transporting pallets 3 in the X direction is provided between a lower portion of the shelf frame 7 and the bar feeding position 71.

The pallet forwarding device 101 serves to transport the pallet 3 located at the lower portion of the shelf frame 7 by the elevating device 21 into the bar feeding position 71, or transport the pallet 3 from the bar feeding position 71 into the lower portion of the shelf frame 7. The pallet forwarding device 101 mainly consists of an endless slat or chain conveyor extending in the X direction.

A bar forwarding device 77 for transporting and feeding the bars B from the pallet 3 positioned in the bar feeding position 71 into the first and second bar processing machines 63A, 63B respectively disposed at the sides of the bar feeding position 71, is so designed as similar to that of the first embodiment. Therefore, components with the same function are assigned the same reference characters, and a further detailed explanation will be omitted.

In this fourth embodiment, also, an effect similar to those of the other embodiments mentioned above is obtained.

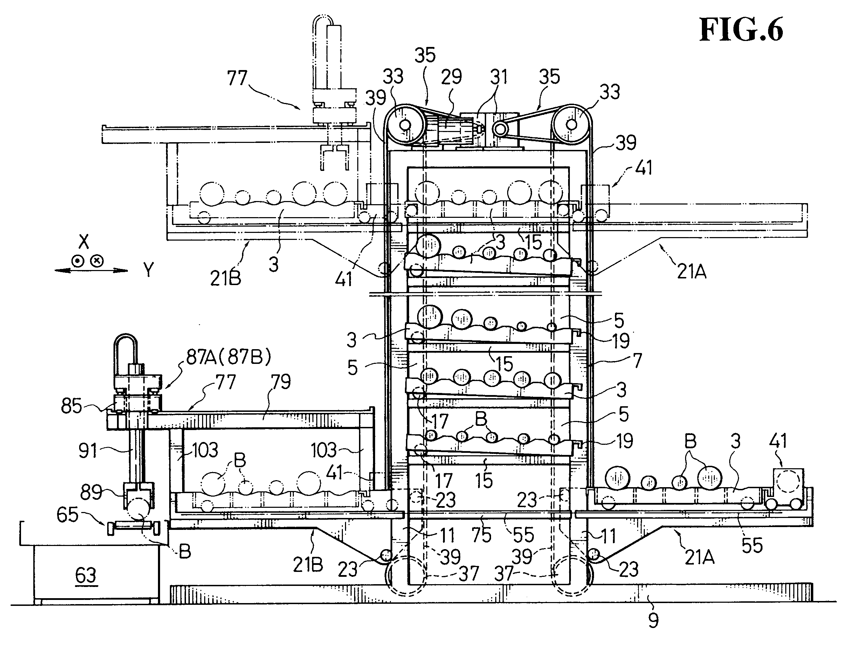

Fig. 6 is a sectional elevation for showing and explaining a fifth embodiment of the present invention, and is similar to Fig. 1 of the first embodiment.

In this fifth embodiment, a first vertically movable elevating device 21A is provided at the front end of a shelf frame 7 while a second vertically movable elevating device 21B is provided at the rear end of the shelf frame 7. A bar forwarding device 77 is mounted on the second elevating device 21B, so that the second elevating device 21B serves as a bar feeding position.

The first elevating device 21A of this embodiment is the same as the elevating device 21 in the first embodiment. Furthermore, the second elevating device 21B is almost the same as the first elevating device 21A except that the second elevating device 21B is not provided with a traverser 41. The second elevating devices 21B is symmetrically constituted and disposed with the first elevating devices 21A, and the mechanism for vertically moving the first and second elevating devices is also symmetrical. Therefore, an explanation of the portions of the first and second elevating positions 21A and 21B of which function is the same as those of the elevating device 21 of the first embodiment is omitted, and same reference characters are used for these portions.

The bar forwarding device 77 is mounted on the second elevating device 21B through a plurality of, for example, four supports 103 secured to the ends of the second elevating device 21B. The constitution of the bar forwarding device 77 is therefore the same as that shown in the first embodiment except for the supports 103, and the components which function the same are assigned the same reference characters and are not explained.

In this fifth embodiment, furthermore, pallet bearing rails 15 of the pallet shelves 5 are formed with racks (not shown) which engage pinions 53 of a traverser 41 disposed on the first elevating device 21A so that the traverser 41 can enter each pallet shelf 5 of the shelf frame 7 and push a pallet 3 stored on each pallet shelf 5 onto the second elevating device 21B positioned at the rear of the shelf frame 7.

According to the design mentioned above in this fifth embodiment, the traverser 41 mounted on the first elevating device 21A can push the pallet 3 on the pallet shelf 5 onto the second elevating device 21B when both the first and second elevating devices 21A and 21B are respectively positioned in the front and rear of the pallet shelf 5 at the same height.

After the pallet has been pushed onto the second elevating device 21B, the second elevating device 21B is lowered to its lowest position. Then, the bar forwarding device 77 picks up some of bars B supported on the pallet 3 and feed them piece by piece to the bar processing machine 63.

After the bars B have been processed by the bar processing machine 63, the pallet 3 on the second elevating device 21B is moved through the lower portion of the shelf frame 7 onto the first elevating device 21A by the traverser 41.

When the bars B removed from the pallet 3 on the second elevating device 21B and fed to the bar processing machine 63 are processed, the first elevating device 21A can withdraw an empty pallet 3 from a predetermined pallet shelf 5 for storing new bar pieces to be processed and can position the pallet 3 on the original pallet shelf 5.

The bar forwarding device 77 is mounted on the second elevating device 21B in this fifth embodiment. However it may be positioned at a predetermined location so as to move vertically between the guide rails 79 provided at both ends of the bar forwarding device 77, the same as in the first embodiment.

The device 1 of this fifth embodiment gives an effect similar to that obtained in the other above embodiments.

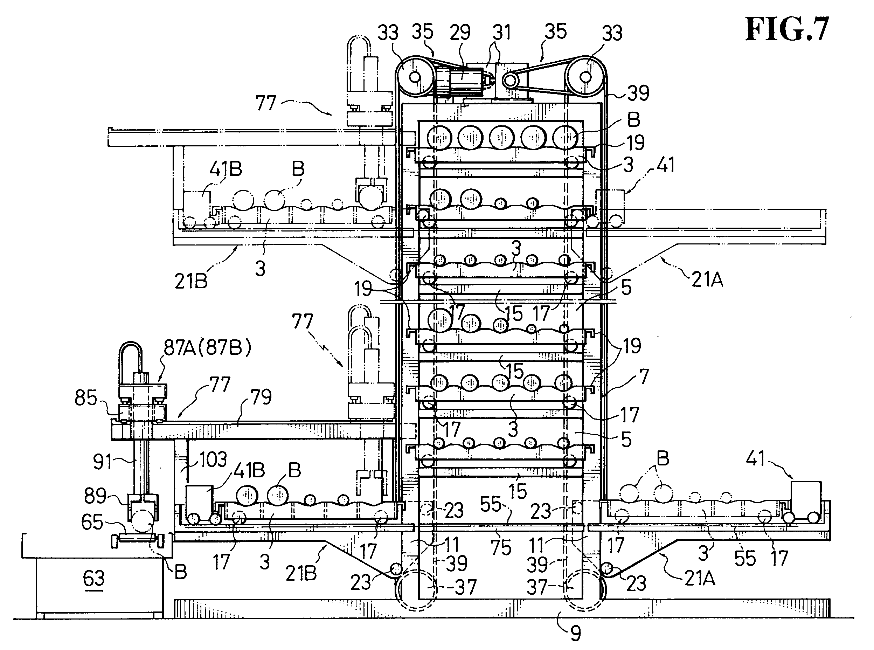

Fig. 7 shows a sixth embodiment of the present invention. In this embodiment, a second traverser 41B is attached to the second elevating device 21B of the fifth embodiment. The second traverser 41B moves forward and backward to transport a pallet 3 into and out of each pallet shelf 5. The pallet 3 is provided with hooks 19 at the front and rear ends.

The configuration other than the hooks is the same as that of the above fifth embodiment. Components with the same function are therefore assigned the same reference characters, and further explanation is omitted.

As the second traverser 41B attached to the second elevating device 21B can remove the pallet 3 from any pallet shelves 5 in this embodiment, the second elevating device 21B can be used exclusively for removing the pallet 3 from any pallet shelves 5 and feeding the bars B on the pallet 3 to the bar processing machine 63, or returning the empty pallets 3 to the pallet shelves 5 after all the bars B on the pallets 3 have been fed to the bar processing machine 63.

On the other hand, the first elevating device 21A can be used exclusively for receiving the empty pallets 3 from the second elevating device 21B for storing new bars on the empty pallets and placing the pallets 3 with the new bars onto the pallet shelves 5, or taking out the empty pallets 3 of the pallet shelves 5 for storing new bars on the empty pallets 3 and returning the pallets 3 with the new bars to the prior pallet shelves 5.

That is, in this sixth embodiment, the pallets 3 can be used while being circulated clockwise or counterclockwise in Fig. 7. Thus, the feeding of bars B to the bar processing machine 63 and the charging of new bars onto the pallet 3 are carried out efficiently.

In the configuration of this sixth embodiment as well as the fifth embodiment, furthermore, the bar forwarding device 77 can pick up one required bar B on the pallet 3 withdrawn by the second elevating device 21B and then, after the pallet 3 has been transported onto the original pallet shelf 5, descend to the lowest position to feed the bar into the bar processing machine 63.

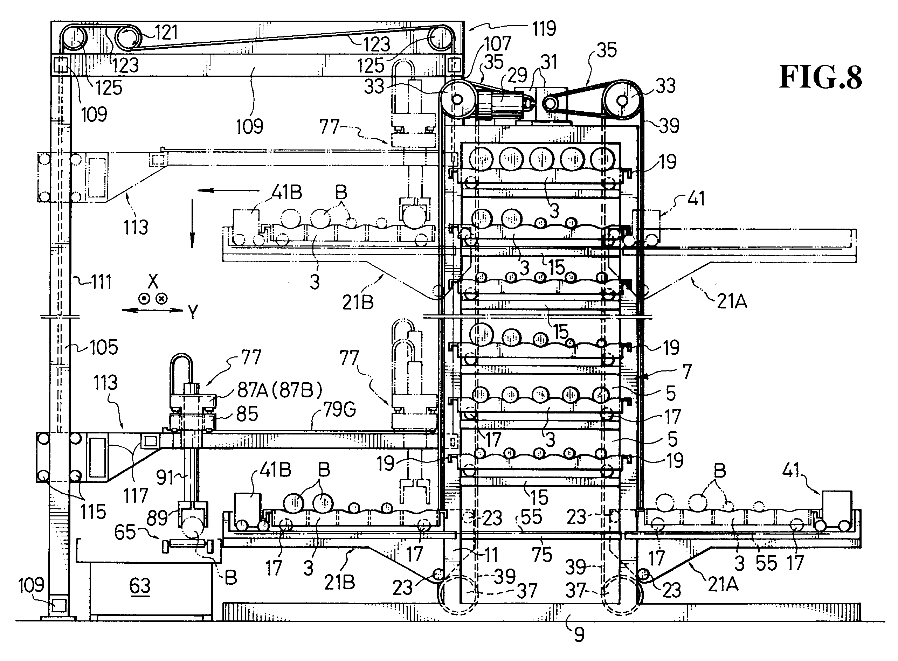

Fig. 8 is a sectional elevation showing a seventh embodiment of the present invention, similar to Fig. 1.

In this seventh embodiment, configuration of the bar transporting device 1 is similar to that of the sixth embodiment shown in Fig. 7. The different point is that the bar forwarding device 77 is vertically movable independently of the second elevating device 21.

A plurality of rear columns 105 (the left side in the drawing) and front columns 107 are disposed at the rear of the shelf frame 7. The front and rear columns 107, 105 are suitably connected to each other by a plurality of horizontal beams 109 to configure a frame structure 111 as a whole.

A vertically movable elevating frame 113 is disposed between the front and rear columns 107 and 105. The elevating frame 113 mainly consists of two guide rails 79G, which correspond to the guide rails 79 of the first embodiment, each extending in the Y direction, and a plurality of tie beams 117 which suitably connect the guide rails 79G. A proximal end of the elevating frame 113, or proximal ends of the guide rails 79G are guided by a plurality of guide rollers 115 along the rear columns 105 while a distal end of the elevating frame 113, or distal ends of the guide rails 79G are guided by a plurality of rollers (not shown) along the front columns 107.

A bar forwarding device 77 similar to those in the above explained embodiments, is slidably mounted on the guide rails 79G so that it can move forward and backward on the guide rails 79G in the Y direction. A driving device 119 for moving the elevating frame 113 vertically along the front and rear columns 107, 105 is provided on the upper portion of the frame structure 111. The driving device 119 has a drum 121 secured to the upper portion of the frame structure 111, and a plurality of chains or wires 123. The drum is rotated clockwise and counterclockwise by a motor (not shown). One end of each wire 123 is secured to the drum 121 while the other end is connected through guide roller 125 disposed on the upper portion of the frame structure 111, to the proximal or distal end of the guide rail 79G as shown in the drawing.

Other configuration is similar to that of the sixth embodiment described above and shown in Fig. 8. Therefore, components with the same function are assigned the same reference characters, and a further detailed explanation will be omitted.

As can be understood from the above configuration in the seventh embodiment, the wires 123 are wound or reversed by actuating the driving device 119 causing the elevating frame 113 to rise or descend. Thus, the bar forwarding device 77 vertically moves, independent of and relative to the second elevating device 21B.

The bars B, in this seventh embodiment, can be fed from the pallet 3 positioned at the rear of the pallet shelve 5 into the bar processing machine 63.

The second elevating device 21B may be omitted as a modified example of this seventh embodiment. In this case, the pallet bearing rails 15 may have extendable mechanism so that they can extend backward and become short to the original length when necessary. In this modified example, the bar forwarding device 77 transports the bars B from the pallet 3 positioned at the bar feeding position, which is at the rear of the pallet shelf 5, into the bar processing machine 63.

As can be seen from the above embodiments, when the bar forwarding device 77 transports the bars B from the pallet 3 into the bar processing machine 63, the pallet 3 is positioned at the bar forwarding position which is at the rear or the side, or in the lower portion of the shelf frame 7, on the second elevating device 21B, or at the rear of the shelf 5 or shelf frame 7.

### Industrial Applicability

As can be understood from the above explanation, the bar transporting device of the present invention can easily transport the pallets from the shelves 7 vertically arranged in the shelf frame 5 and feed bars B of several shapes and dimensions lying on each pallet 3 into the bar processing machine or machines 63, 63A, and 63B, and return the residual bars produced during the processing of the bars B onto the original pallet 3.

According to the present invention, therefore, many kinds of bars B are automatically transported into and out of the bar processing machines 63, 63A, and 63B, and automation with little or no man power for processing the bars by the bar processing machine 63 and saving of space for machinery are possible.

## Claims

1. A bar transporting device (1) for transporting bars into and out of at least one bar processing machine (63, 63A, 63B), comprising :
a shelf frame (7) provided with vertically arranged pallet shelves (5) onto which pallets (3) loaded with bars (B) are to be removably stored;
a vertically movable elevating device (21) provided at the front end of the shelf frame (7) and adapted to transport the pallets (3) into and out of the shelf frame (7); and
a bar forwarding device (77) for transporting the bars (B) of a pallet (3) removed from a pallet shelf (5), towards the bar processing machine (63, 63A, 63B),
said elevating device (21) comprising
a base (25) guided along the shelf frame (7) for vertical movement relative thereto; and
a transporting means (41) which is movable along the base (25) for transporting the pallets (3) between the pallet shelves (5) and the base (25) and between the base (25) and a bar feeding position (71),
characterised in that the bar forwarding device (77) is provided above the level of the bar feeding position (71) and opposite said elevating device (21), and has bar holding portions (89) movable along a vertical direction and two horizontal directions (X, Y), and in that
either said transporting means (41) or said forwarding device (77) is arranged so as to be able to reciprocate also within said shelf frame (7) in a horizontal direction (Y) perpendicular to the front end of the shelf frame (7) and perpendicular to the longitudinal direction (X) of the bars (B) laid horizontally.

2. A bar transporting device (1) for transporting bars (B) into and out of at least one bar processing machine (63, 63A, 63B), comprising :
a shelf frame (7) provided with vertically arranged pallet shelves (5) onto which pallets (3) loaded with bars (B) are to be removably stored;
a vertically movable elevating device (21) provided at the front end of the shelf frame (7) and adapted to transport the pallets (3) into and out from the shelf frame (7); and
a bar forwarding device (77) for transporting the bars (B) of a pallet (3) removed from a pallet shelf (5), towards the bar processing machine (63, 63A, 63B),
said elevating device (21) comprising :
a base (25) guided along said frame (7) for vertical movement relative thereto; as well as
a transporting means (41) movable along the base (25) for transporting the pallets (3) between the pallet shelves (5) and the base (25) and between the base (25) and a bar feeding position (71) located in the lower part of said shelf frame (7),
characterised in that the bar forwarding device (77) is provided within the lower part of the shelf frame (7), above said bar feeding position (71) and has bar holding portions (89) movable along a vertical direction and two horizontal directions (X, Y), the bar feeding direction of said holding portions (89) out of the shelf frame (7) towards said bar processing machine (63, 63A, 63B) being parallel to the front end of the shelf frame and to the longitudinal direction of the bars (B).

3. A bar transporting device (1) for transporting bars (B) into and out of at least one bar processing machine (63, 63A, 63B) comprising :
a shelf frame (7) provided with vertically arranged pallet shelves (5) onto which pallets (3) loaded with bars (B) are to be removably stored;
a vertically movable elevating device (21) provided at the front end of the shelf frame (7) and adapted to transport the pallets (3) into and out of the shelf frame (7); and
a bar forwarding device (77) for transporting the bars (B) of a pallet (3) removed from a pallet shelf (5) towards the bar processing machine (63, 63A, 63B),
said elevating device (21) comprising :
a base (25) guided along the shelf frame (7) for vertical movement relative thereto; as well as
a transporting means (41) movable along the base (25) for transporting the pallets (3) between a pallet shelf (5) and the base (25) and between the base (25) and a pallet position located at the lower portion of the shelf frame (7);
characterised in that the bar forwarding position (71) is arranged opposite a lateral side of said shelf frame (7),
that a pallet forwarding device (101) is arranged to transport a pallet (3) placed at the lower portion of the shelf frame (7), into the bar feeding position (71) and therefrom back into said lower portion of the shelf frame (7); and in that
the bar forwarding device (77) is provided above the level of the bar feeding position (71) and opposite said lateral side of the shelf frame (7) and has bar holding portions (89) movable along a vertical direction and two horizontal directions (X, Y), whereby the X-direction is parallel to the longitudinal direction of the bars (B) and the transport direction of the pallet forwarding device (101).

4. A bar transporting device (1) for transporting bars (B) into and out of at least one bar processing machine (63, 63A, 63B), comprising :
a shelf frame (7) provided with vertically arranged pallet shelves (5) onto which pallets (3) loaded with bars (B) are to be removably stored;
a first vertically movable elevating device (21A) provided at the front end of the shelf frame (7) and adapted to transport the pallets (3) into and out of the shelf frame (7); and
a bar forwarding device (77) for transporting the bars (B) of a pallet (3) removed from a pallet shelf (5), towards the bar processing machine (63, 63A, 63B),
said first elevating device (21A) including:
a transporting means (41) which is movable along the corresponding base for transporting the pallets (3) into or out of each pallet shelf (5) and between the first elevating device (21A) and a bar feeding position (71),
characterised in that a second elevating device (21B) is provided at the rear end of said shelf frame (7), each of said elevating devices (21A, 21B) having a base guided along the shelf frame (7) for vertical movement relative thereto,
that the bar forwarding device (77) is provided opposite said first elevating device (21A) at the rear end of said shelf frame (7), is vertically movable relative to said shelf frame (7) and has bar holding portions (89) movable along a vertical direction and two horizontal directions (X, Y), and
that said transporting means (41) is arranged so as to be able to push a pallet (3) onto the second elevating device (21B) in alignment with the first elevating device (21A).

5. The device of one of claims 1 to 4, characterised in that the bar forwarding device (77) for transporting the bars (B) from the pallet (3) positioned at the bar feeding position (71) towards the bar processing machine (63, 63A, 63B) includes a plurality of carriages (87A, 87B), a base (85) movable in the direction (X) parallel to the extension of the bars (B), guide rails (79) extending in a direction (Y) perpendicular to the longitudinal direction (X) of the bar (B) and vertically movable bar holding portions (89) each of them being mounted on one of said carriages (87A, 87B),
that said base (85) is horizontally movable on said guide rails (79), and
that said carriages are mounted on said base (85) so as to be independently or synchronously movable in the longitudinal direction (X) of the bar (B).

6. The device of claim 1 or 2, characterised in that the bar forwarding device (77) for transporting the bars (B) from the pallets (3) positioned at the bar feeding position (71), towards the bar processing machine (63, 63A, 63B) includes a plurality of carriages (95A, 95B) movably mounted on a pair of guide rails (93) provided in the lower part of the shelf frame (7) and extending in the X-direction of the bars (B) beyond both lateral ends of the shelf frame (7), and
that the bar forwarding device (77) further includes, for each carriage (95A, 95B), a slide base (97) movable along said guide rails (93) and a slider (99) mounted on a corresponding slide base (97) so as to be able to reciprocatable along said base (97) in the Y-direction, as well as a vertically movable lifting arm (91) provided on said slider (99) and attached, at its lower end, to a bar holding portion (89).

7. The device of claim 5 or 6, characterised in that the spacing between the carriages (87A, 87B or 95A, 95B) is adjustable for various lengths of the bars (B).

8. The device of claim 1, characterised in that the bar feeding position (71) opposite the elevating device (21) is located at the rear end of the shelf frame (7).

9. The device of claim 1, characterised in that the bar feeding position (71) opposite the elevating device (21) is located within the lower part of the shelf frame (7) and that the bar forwarding device (77) is arranged to be reciprocatable between the bar processing machine (63, 63A, 63B) located at the rear end of said shelf frame (7) and said feeding position (71).

10. The device of claim 4, characterised in that the bar forwarding device (77) is mounted on the second elevating device (21B).

11. The device of claim 4 or 10, characterised in that the base of the second elevating device (21B) is provided with a transporting means (41B) for transporting the pallet (3) into and out of each pallet shelf (5) of the shelf frame (7).

12. The device of claim 4, characterised in that the bar forwarding device (77) is vertically movable independently of the second elevating device (21B).

## Patentansprüche

1. Stangentransportvorrichtung (1) zum Transportieren von Stangen in zumindest eine Stangenverarbeitungsmaschine (63, 63A, 63B) hinein und aus selbiger heraus, welche umfaßt:
ein Regalgestell (7) mit vertikal angeordneten Palettenregalen (5), auf denen mit Stangen (B) beladene Paletten (3) abnehmbar gelagert werden;
eine vertikal bewegliche Hebevorrichtung (21) am Vorderende des Regalgestells (7), mit der die Paletten (3) in das Regalgestell (7) hinein- und aus selbigem herausbewegt werden können; und
eine Stangenweitergabeeinrichtung (77) zum Transportieren der Stangen (B) einer aus einem Palettenregal (5) entnommenen Palette (3) zur Stangenverarbeitungsmaschine (63, 63A, 63B),
wobei die Hebevorrichtung (21) aufweist:
eine Grundplatte (25), die am Regalgestell (7) entlang geführt wird, um vertikal zu ihm bewegt zu werden, sowie
eine Transporteinrichtung (41), die sich an der Grundplatte (25) entlangbewegen läßt, um die Paletten (3) zwischen den Palettenregalen (5) und der Grundplatte (25) und zwischen der Grundplatte (25) und einer Stangenzuführposition (71) zu transportieren,
**dadurch gekennzeichnet, daß** sich die Stangenweitergabeeinrichtung (77) über der Ebene der Stangenzuführposition (71) und auf der gegenüberliegenden Seite der Hebevorrichtung (21) befindet und Stangenhalteteile (89) hat, die sich in vertikale Richtung und zwei horizontale Richtungen (X, Y) bewegen lassen, **und dadurch, daß**
entweder die Transporteinrichtung (41) oder die Weitergabeeinrichtung (77) so angeordnet ist, daß sie sich auch innerhalb des Regalgestells (7) in horizontaler Richtung (Y), senkrecht zum Vorderende des Regalgestells (7) und senkrecht zur Längsrichtung (X) der horizontal aufgelegten Stangen (B) hin- und herbewegen läßt.

2. Stangentransportvorrichtung (1) zum Transportieren von Stangen (B) in zumindest eine Stangenverarbeitungsmaschine (63, 63A, 63B) hinein und aus selbiger heraus, welche umfaßt:
ein Regalgestell (7) mit vertikal angeordneten Palettenregalen (5), auf denen mit Stangen (B) beladene Paletten (3) abnehmbar gelagert werden;
eine vertikal bewegliche Hebevorrichtung (21) am Vorderende des Regalgestells (7), mit der die Paletten (3) in das Regalgestell (7) hinein- und aus selbigem herausbewegt werden können; und
eine Stangenweitergabeeinrichtung (77) zum Transportieren der Stangen (B) einer aus einem Palettenregal (5) entnommenen Palette (3) zur Stangenverarbeitungsmaschine (63, 63A, 63B),
wobei die Hebevorrichtung (21) aufweist:
eine Grundplatte (25), die am Regalgestell (7) entlanggeführt wird, um vertikal zu ihm bewegt zu werden, sowie
eine Transporteinrichtung (41), die sich an der Grundplatte (25) entlangbewegen läßt, um die Paletten (3) zwischen den Palettenregalen (5) und der Grundplatte (25) und zwischen der Grundplatte (25) und einer Stangenzuführposition (71) im unteren Teil des Regalgestells (7) zu transportieren,
**dadurch gekennzeichnet, daß** sich die Stangenweitergabeeinrichtung (77) im unteren Teil des Regalgestells (7) oberhalb der Stangenzuführposition (71) befindet und Stangenhalteteile (89) hat, die sich in vertikale Richtung und zwei horizontale Richtungen (X, Y) bewegen lassen, wobei die Stangenzuführrichtung der Halteteile (89) aus dem Regalgestell (7) heraus zur Stangenverarbeitungsmaschine (63, 63A, 63B) hin parallel zum Vorderende des Regalgestells und zur Längsrichtung der Stangen (B) ist.

3. Stangentransportvorrichtung (1) zum Transportieren von Stangen (B) in zumindest eine Stangenverarbeitungsmaschine (63, 63A, 63B) hinein und aus selbiger heraus, welche umfaßt:
ein Regalgestell (7) mit vertikal angeordneten Palettenregalen (5), auf denen mit Stangen (B) beladene Paletten (3) abnehmbar gelagert werden;
eine Stangenweitergabeeinrichtung (77) zum Transportieren der Stangen (B) einer aus einem Palettenregal (5) entnommenen Palette (3) zur Stangenverarbeitungsmaschine (63, 63A, 63B),
wobei die Hebevorrichtung (21) aufweist:
eine Grundplatte (25), die am Regalgestell (7) entlang geführt wird, um vertikal zu ihm bewegt zu werden, sowie
eine Transporteinrichtung (41), die sich an der Grundplatte (25) entlangbewegen läßt, um die Paletten (3) zwischen den Palettenregalen (5) und der Grundplatte (25) und zwischen der Grundplatte (25) und einer Palettenposition im unteren Teil des Regalgestells (7) zu transportieren,
**dadurch gekennzeichnet, daß** die Stangenweitergabeposition (71) gegenüber einer Seite des Regalgestells (7) angeordnet ist,
**daß** eine Palettenweitergabeeinrichtung (101) zum Transportieren einer Palette (3), die sich im unteren Teil des Regalgestells (7) befindet, in die Stangenzuführposition (71) hinein und aus ihr heraus zurück in den unteren Teil des Regalgestells (7) vorgesehen ist; **und dadurch, daß**
sich die Stangenweitergabeeinrichtung (77) über der Ebene der Stangenzuführposition (71) und gegenüber der Seite des Regalgestells (7) befindet und Stangenhalteteile (89) hat, die sich in vertikale Richtung und zwei horizontale Richtungen (X, Y) bewegen lassen, wodurch die X-Richtung parallel zur Längsrichtung der Stangen (B) und zur Transportrichtung der Palettenweitergabeeinrichtung (101) verläuft.

4. Stangentransportvorrichtung (1) zum Transportieren von Stangen (B) in zumindest eine Stangenverarbeitungsmaschine (63, 63A, 63B) hinein und aus selbiger heraus, welche umfaßt:
ein Regalgestell (7) mit vertikal angeordneten Palettenregalen (5), auf denen mit Stangen (B) beladene Paletten (3) abnehmbar gelagert werden;
eine erste vertikal bewegliche Hebevorrichtung (21A) am Vorderende des Regalgestells (7), mit der die Paletten (3) in das Regalgestell (7) hinein- und aus selbigem herausbefördert werden können; und
eine Stangenweitergabeeinrichtung (77) zum Transportieren der Stangen (B) einer aus einem Palettenregal (5) entnommenen Palette (3) zur Stangenverarbeitungsmaschine (63, 63A, 63B),
wobei die erste Hebevorrichtung (21A) umfaßt:
eine Stangenweitergabeeinrichtung (77) zum Transportieren der Stangen (B) einer aus einem Palettenregal (5) entnommenen Palette (3) zur Stangenverarbeitungsmaschine (63, 63A, 63B),
wobei die erste Hebevorrichtung (21A) umfaßt:
eine Transporteinrichtung (41), die sich an der entsprechenden Grundplatte entlangbewegen läßt, um die Paletten (3) in jedes Palettenregal (5) hinein oder aus ihm heraus und zwischen der ersten Hebevorrichtung (21A) und einer Stangenzuführposition (71) zu transportieren,
**dadurch gekennzeichnet, daß** eine zweite Hebevorrichtung (21B) am Hinterende des Regalgestells (7) vorgesehen ist, wobei jede der Hebevorrichtungen (21A, 21B) eine am Regalgestell (7) entlang geführte Grundplatte zur vertikalen Bewegung zu ihm aufweist,
**daß** die Stangenweitergabeeinrichtung (77) gegenüber der ersten Hebevorrichtung (21A) am Hinterende des Regalgestells (7) geschaffen wird, vertikal zum Regalgestell (7) beweglich ist und Stangenhalteteile (89) hat, die sich in eine vertikale Richtung und zwei horizontale Richtungen (X, Y) bewegen lassen, und
**daß** die Transporteinrichtung (41) so angeordnet ist, daß sie eine Palette (3) auf die zweite Hebevorrichtung (21B) schieben kann, die zur ersten Hebevorrichtung (21A) ausgerichtet ist.

5. Vorrichtung nach einem der Ansprüche 1 bis 4, **dadurch gekennzeichnet, daß** die Stangenweitergabeeinrichtung (77) zum Transportieren der Stangen (B) aus der an der Stangenzuführposition (71) befindlichen Palette (3) zur Stangenverarbeitungsmaschine (63, 63A, 63B) umfaßt: eine Vielzahl von Wagen (87A, 87B), eine in Richtung (X) parallel zur Längenausdehnung der Stangen (B) bewegliche Grundplatte (85), Führungsschienen (79), die in Richtung (Y) senkrecht zur Längsrichtung (X) der Stange (B) verlaufen, und vertikal bewegliche Stangenhalteteile (89), von denen jedes an einem der Wagen (87A, 87B) montiert ist,
**daß** die Grundplatte (85) auf den Führungsschienen (79) horizontal beweglich ist und
**daß** die Wagen auf der Grundplatte (85) angebracht sind, so daß sie sich unabhängig voneinander oder synchron zueinander in Längsrichtung (X) der Stange (B) bewegen lassen.

6. Vorrichtung nach Anspruch 1 oder 2, **dadurch gekennzeichnet, daß** die Stangenweitergabeeinrichtung (77) zum Transportieren der Stangen (B) aus den an der Stangenzuführposition (71) befindlichen Paletten (3) zur Stangenverarbeitungsmaschine (63, 63A, 63B) umfaßt: eine Vielzahl von Wagen (95A, 95B), die beweglich auf einem Paar Führungsschienen (93) im unteren Teil des Regalgestells (7) angebracht sind und in Richtung (X) der Stangen (B) über die beiden seitlichen Enden des Regalgestells (7) hinausreichen, und
**daß** die Stangenweitergabeeinrichtung (77) zudem für jeden Wagen (95A, 95B) eine Gleitunterlage (97), die sich entlang der Führungsschienen (93) bewegen läßt, und eine auf einer entsprechenden Gleitunterlage (97) befestigte Gleiteinrichtung (99), so daß sie auf der Unterlage (97) in Y-Richtung hin- und herbewegt werden kann, sowie einen vertikal beweglichen Hebearm (91) umfaßt, der an der Gleiteinrichtung (99) vorgesehen ist und am unteren Ende an einem Stangenhalteteil (89) befestigt ist.

7. Vorrichtung nach Anspruch 5 oder 6, **dadurch gekennzeichnet, daß** der Abstand zwischen den Wagen (87A, 87B bzw. 95A, 95B) für verschiedene Stangenlängen (B) einstellbar ist.

8. Vorrichtung nach Anspruch 1, **dadurch gekennzeichnet, daß** sich die Stangenzuführposition (71) gegenüber der Hebevorrichtung (21) am Hinterende des Regalgestells (7) befindet.

9. Vorrichtung nach Anspruch 1, **dadurch gekennzeichnet, daß** sich die Stangenzuführposition (71) gegenüber der Hebevorrichtung (21) im unteren Teil des Regalgestells (7) befindet und daß die Stangenweitergabeeinrichtung (77) so angeordnet ist, daß sie zwischen der Stangenverarbeitungsmaschine (63, 63A, 63B) am Hinterende des Regalgestells (7) und der Zuführposition (71) hin- und herbewegt werden kann.

10. Vorrichtung nach Anspruch 4, **dadurch gekennzeichnet, daß** die Stangenweitergabeeinrichtung (77) an der zweiten Hebevorrichtung (21B) angebracht ist.

11. Vorrichtung nach Anspruch 4 oder 10, **dadurch gekennzeichnet, daß** die Grundplatte der zweiten Hebevorrichtung (21B) eine Transporteinrichtung (41B) zum Transportieren der Palette (3) in jedes Palettenregal (5) des Regalgestells (7) hinein und aus selbigem heraus aufweist.

12. Vorrichtung nach Anspruch 4, **dadurch gekennzeichnet, daß** sich die Stangenweitergabeeinrichtung (77) unabhängig von der zweiten Hebevorrichtung (21B) vertikal bewegen läßt.

## Revendications

1. Dispositif de transport de barre (1) destiné à transporter des barres dans et hors d'au moins une machine de traitement de barre (63, 63A, 63B), comportant :
un bâti d'étagère (7) pourvu d'étagères à palette disposées verticalement (5) sur lesquelles des palettes (3) chargées avec des barres (B) doivent être stockées de manière amovible;
un dispositif d'élévation verticalement mobile (21) prévu à l'extrémité avant du bâti d'étagère (7) et prévu pour transporter les palettes (3) dans et hors du bâti d'étagère (7); et
un dispositif d'avance de barre (77) destiné à transporter les barres (B) d'une palette (3) enlevée d'une étagère à palette (5), vers la machine de traitement de barre (63, 63A, 63B),
ledit dispositif d'élévation (21) comportant :
une base (25) guidée le long du bâti d'étagère (7) pour un mouvement vertical par rapport à celui-ci; et
des moyens de transport (41) qui sont mobiles le long de la base (25) afin de transporter les palettes (3) entre les étagères à palette (5) et la base (25) et entre la base (25) et une position d'alimentation en barre (71),
caractérisé en ce que le dispositif d'avance de barre (77) est prévu au-dessus du niveau de la position d'alimentation en barre (71) et opposé audit dispositif d'élévation (21), et possède des parties de maintien de barre (89) mobiles le long d'une direction verticale et de deux directions horizontales (X, Y), et en ce que
lesdits moyens de transport (41) ou bien ledit dispositif d'avance (77) sont prévus pour pouvoir se déplacer de manière alternative également dans ledit bâti d'étagère (7) dans une direction horizontale (Y) perpendiculaire à l'extrémité avant du bâti d'étagère (7) et perpendiculaire à la direction longitudinale (X) des barres (B) disposées horizontalement.

2. Dispositif de transport de barre (1) destiné à transporter des barres dans et hors d'au moins une machine de traitement de barre (63, 63A, 63B), comportant :
un bâti d'étagère (7) pourvu d'étagères à palette disposées verticalement (5) sur lesquelles des palettes (3) chargées avec des barres (B) doivent être stockées de manière amovible;
un dispositif d'élévation verticalement mobile (21) prévu à l'extrémité avant du bâti d'étagère (7) et prévu pour transporter les palettes (3) dans et hors du bâti d'étagère (7); et
un dispositif d'avance de barre (77) destiné à transporter les barres (B) d'une palette (3) enlevée d'une étagère à palette (5), vers la machine de traitement de barre (63, 63A, 63B),
ledit dispositif d'élévation (21) comportant :
une base (25) guidée le long dudit bâti (7) pour un mouvement vertical par rapport à celui-ci; ainsi que
des moyens de transport (41) mobiles le long de la base (25) afin de transporter les palettes (3) entre les étagères à palette (5) et la base (25) et entre la base (25) et une position d'alimentation en barre (71) située dans la partie inférieure dudit bâti d'étagère (7),
caractérisé en ce que le dispositif d'avance de barre (77) est prévu dans la partie inférieure du bâti d'étagère (7), au-dessus de ladite position d'alimentation en barre (71) et possède des parties de maintien de barre (89) mobiles le long d'une direction verticale et de deux directions horizontales (X, Y), la direction d'alimentation en barre desdites parties de maintien (89) hors du bâti d'étagère (7) vers ladite machine de traitement de barre (63, 63A, 63B) étant parallèle à l'extrémité avant du bâti d'étagère et à la direction longitudinale des barres (B).

3. Dispositif de transport de barre (1) destiné à transporter des barres dans et hors d'au moins une machine de traitement de barre (63, 63A, 63B), comportant :
un bâti d'étagère (7) pourvu d'étagères à palette disposées verticalement (5) sur lesquelles des palettes (3) chargées avec des barres (B) doivent être stockées de manière amovible;
un dispositif d'élévation verticalement mobile (21) prévu à l'extrémité avant du bâti d'étagère (7) et prévu pour transporter les palettes (3) dans et hors du bâti d'étagère (7); et
un dispositif d'avance de barre (77) destiné à transporter les barres (B) d'une palette (3) enlevée d'une étagère à palette (5) vers la machine de traitement de barre (63, 63A, 63B),
ledit dispositif d'élévation (21) comportant :
une base (25) guidée le long du bâti d'étagère (7) pour un mouvement vertical par rapport à celui-ci; ainsi que
des moyens de transport (41) qui sont mobiles le long de la base (25) afin de transporter les palettes (3) entre une étagère à palette (5) et la base (25) et entre la base (25) et une position de palette située au niveau de la partie inférieure du bâti d'étagère (7),
caractérisé en ce que la position d'avance de barre (71) est prévue à l'opposé d'un côté latéral dudit bâti d'étagère (7),
en ce qu'un dispositif d'avance de palette (101) est prévu pour transporter une palette (3) placée au niveau de la partie inférieure du bâti d'étagère (7), dans la position d'alimentation en barre (71) et de là de nouveau dans ladite partie inférieure du bâti d'étagère (7); et en ce que
le dispositif d'avance de barre (77) est prévu au-dessus du niveau de la position d'alimentation en barre (71) et opposé audit côté latéral du bâti d'étagère (7) et possède des parties de maintien de barre (89) mobiles le long d'une direction verticale et de deux directions horizontales (X, Y), de sorte que la direction X est parallèle à la direction longitudinale des barres (B) et à la direction de transport du dispositif d'avance de palette (101).

4. Dispositif de transport de barre (1) destiné à transporter des barres dans et hors d'au moins une machine de traitement de barre (63, 63A, 63B), comportant :
un bâti d'étagère (7) pourvu d'étagères à palette disposées verticalement (5) sur lesquelles des palettes (3) chargées avec des barres (B) doivent être stockées de manière amovible;
un premier dispositif d'élévation verticalement mobile (21A) prévu à l'extrémité avant du bâti d'étagère (7) et prévu pour transporter les palettes (3) dans et hors du bâti d'étagère (7); et
un dispositif d'avance de barre (77) destiné à transporter les barres (B) d'une palette (3) enlevée d'une étagère à palette (5), vers la machine de traitement de barre (63, 63A, 63B),
ledit premier dispositif d'élévation (21A) comportant :
des moyens de transport (41) qui sont mobiles le long de la base correspondante afin de transporter les palettes (3) dans et hors de chaque étagère à palette (5) et entre le premier dispositif d'élévation (21A) et une position d'alimentation en barre (71),
caractérisé en ce qu'un deuxième dispositif d'élévation (21B) est prévu à l'extrémité arrière dudit bâti d'étagère (7), chacun desdits dispositifs d'élévation (21A, 21B) ayant une base guidée le long du bâti d'étagère (7) pour un mouvement vertical par rapport à celui-ci,
en ce que le dispositif d'avance de barre (77) est prévu à l'opposé dudit premier dispositif d'élévation (21A) à l'extrémité arrière dudit bâti d'étagère (7), est verticalement mobile par rapport audit bâti d'étagère (7) et possède des parties de maintien de barre (89) mobiles le long d'une direction verticale et de deux directions horizontales (X, Y), et
en ce que lesdits moyens de transport (41) sont prévus afin de pouvoir pousser une palette (3) sur le deuxième dispositif d'élévation (21B) en alignement avec le premier dispositif d'élévation (21A).

5. Dispositif selon l'une des revendications 1 à 4, caractérisé en ce que le dispositif d'avance de barre (77) destiné à transporter les barres (B) depuis la palette (3) placée dans la position d'alimentation en barre (71) vers la machine de traitement de barre (63, 63A, 63B) comprend une multiplicité de chariots (87A, 87B), une base (85) mobile dans la direction (X) parallèle à l'extension des barres (B), des rails de guidage (79) s'étendant dans une direction (Y) perpendiculaire à la direction longitudinale (X) de la barre (B) et des parties de maintien de barre verticalement mobiles (89), chacune d'entre elles étant montée sur l'un desdits chariots (87A, 87B),
en ce que ladite base (85) est horizontalement mobile sur lesdits rails de guidage (79), et
en ce que lesdits chariots sont montés sur ladite base (85) afin d'être mobiles de manière indépendante ou en synchronisme dans la direction longitudinale (X) de la barre (B).

6. Dispositif selon la revendication 1 ou 2, caractérisé en ce que le dispositif d'avance de barre (77) destiné à transporter les barres (B) des palettes (3) placées dans la position d'alimentation en barre (71), vers la machine de traitement de barre (63, 63A, 63B) comprend une multiplicité de chariots (95A, 95B) montés de façon mobile sur une paire de rails de guidage (93) prévus dans la partie inférieure du bâti d'étagère (7) et s'étendant dans la direction X des barres (B) au-delà des deux extrémités latérales du bâti d'étagère (7), et
en ce que le dispositif d'avance de barre (77) comprend en outre, pour chaque chariot (95A, 95B), une base coulissante (97) mobile le long desdits rails de guidage (93) et un élément coulissant (99) monté sur une base coulissante correspondante (97) afin de pouvoir être déplacé de manière alternative le long de ladite base (97) dans la direction Y, ainsi qu'un bras de levage verticalement mobile (91) prévu sur ledit élément coulissant (99) et fixé, à son extrémité inférieure, sur une partie de maintien de barre (89).

7. Dispositif selon la revendication 5 ou 6, caractérisé en ce que l'espacement entre les chariots (87A, 87B ou 95A, 95B) est réglable pour différentes longueurs des barres (B).

8. Dispositif selon la revendication 1, caractérisé en ce que la position d'alimentation en barre (71) opposée au dispositif d'élévation (21) se trouve à l'extrémité arrière du bâti d'étagère (7).

9. Dispositif selon la revendication 1, caractérisé en ce que la position d'alimentation en barre (71) opposée au dispositif d'élévation (21) se trouve dans la partie inférieure du bâti d'étagère (7) et en ce que le dispositif d'avance de barre (77) est prévu pour être déplacé de manière alternative entre la machine de traitement de barre (63, 63A, 63B) située à l'extrémité arrière dudit bâti d'étagère (7) et ladite position d'alimentation (71).

10. Dispositif selon la revendication 4, caractérisé en ce que le dispositif d'avance de barre (77) est monté sur le deuxième dispositif d'élévation (21B).

11. Dispositif selon la revendication 4 ou 10, caractérisé en ce que la base du deuxième dispositif d'élévation (21B) est pourvue de moyens de transport (41B) destinés à transporter la palette (3) dans et hors de chaque étagère à palette (5) du bâti d'étagère (7).

12. Dispositif selon la revendication 4, caractérisé en ce que le dispositif d'avance de barre (77) est verticalement mobile indépendamment du deuxième dispositif d'élévation (21B).
